Europäisches Patentamt

(19) European Patent Office

Office européen des brevets

(11) Publication number: **0 131 919**
**A2**

## EUROPEAN PATENT APPLICATION

(21) Application number: **84108212.6**

(22) Date of filing: **12.07.84**

(51) Int. Cl.⁴: **H 04 K 1/04**
**H 04 M 1/72**

(30) Priority: **18.07.83 US 514437**

(43) Date of publication of application:
**23.01.85 Bulletin 85/4**

(84) Designated Contracting States:
**DE FR GB IT NL SE**

(71) Applicant: **MOTOROLA, INC.**
**1303 East Algonquin Road**
**Schaumburg, Illinois 60196(US)**

(72) Inventor: **Wellenstein, Neil N.**
**1718 N. McAllister**
**Tempe Arizona 85281(US)**

(72) Inventor: **Mirtich, Vincent L.**
**5409 E. Corrine**
**Scottsdale Arizona 85254(US)**

(72) Inventor: **Gustin, Jay W.**
**6226 E. Joan De Arc**
**Scottsdale Arizona 85254(US)**

(74) Representative: **Hudson, Peter David**
**Motorola Inc. Patent and Licensing Operations - Europe**
**Jays Close Viables Industrial Estate**
**Basingstoke Hampshire RG22 4PD(GB)**

(54) **Voice privacy system.**

(57) A voice privacy system uses frequency inversion and a digitally encoded address word to achieve privacy. The frequency inversion (11) is accomplished by use of a sideband generator (16, 26) coupled to a low pass filter (10) which passes only the lower sideband. The remaining lower sideband is then combined with the digital address (12) word so that only similar unscramblers with the correct address will unscramble the speech. The unscrambling is accomplished by feeding the scrambled signal through another sideband generator (19, 26) and low pass filter (22) to remove the upper sideband and carrier and again leave a lower sideband which is uninverted. The address is simultaneously taken from the scrambled signal and decoded (21) to provide an enabling signal to the unscrambler upon receipt of the proper address

*FIG. 1*

# VOICE PRIVACY SYSTEM

## Background of the Invention

This invention relates, in general, to data scrambling systems, and more particularly, to apparatus and method for scrambling voice channels to provide a voice privacy system.

It is often desirable to scramble or encode data information to prevent a third party from intercepting the information. In the past, many systems have been used for scrambling information. These systems have included simple techniques such as frequency inversion to more complex encryption techniques.

With the advent of cordless telephones it becomes almost essential that some kind of scrambling or encoding system be used particularly between the base station and the handset. This will prevent neighbors having cordless telephones from eavesdropping on each others' telephone conversations. The encoding or scrambling does not have to be as complex as military encryption systems but yet should provide some degree of security or privacy.

Accordingly, it is an object of the present invention to provide an improved voice privacy system which is easily adaptable to cordless telephone systems.

Yet another object of the present invention is to provide a voice privacy system which does not require additional base band spectrum or channel bandwidth.

Yet another object of the present invention is to provide a low cost, low power privacy system which causes minimum delay in the transmission of information.

## Summary of the Invention

The above and other objects and advantages of the present invention are achieved by providing a privacy system using frequency inversion and an address signal. Frequency inversion is achieved by first multiplying the baseband signal by a higher fixed frequency signal. Either an analog or digital signal multiplier or any sideband generator can be used. An analog technique that is commonly used to achieve frequency inversion is balanced or amplitude modulating the fixed frequency with the baseband signal to provide an upper and lower sideband. The sidebands are then passed through a low pass filter, thereby leaving only the lower sideband which is frequency inverted. This inverted signal is now un-intelligible until passed through a second frequency inverter but still occupies the same baseband as the original signal. The inverted signal is now ready for the remaining signal processing needed to complete the communications transmitter. A coded address is combined with the inverted baseband to provide additional privacy so that receivers equipped with the same voice privacy system cannot de-scramble the frequency inverted signal without decoding the proper address. This address can be combined with the frequency inverted signal by either using time or frequency division multiplexing.

To successfully de-scramble the frequency inverted signal, the address must be successfully decoded to enable the second frequency inverter located in the receiver. An enable signal is generated by decoding the proper address signal, and is used to enable the de-scrambler. The second frequency inverter re-inverts the inverted signal by passing it through another amplitude modulator and low pass filter. The lower sideband now available at the filter output is the original un-inverted baseband signal. It is now ready for the remaining signal processing required to complete the communications receiver.

A method of scrambling information is provided by passing the information through a sideband generator. The carrier signal for the sideband generator is just above the bandwidth of the information. The output of the sideband generator is then passed through a filter to filter out the upper sideband and carrier signal thereby leaving only the lower sideband which is in essence a frequency inverted base band signal. A digital address is then combined with the inverted base band. At the receive end, an address decoder receives the scrambled information and provides an enabling output to the frequency inverter upon decoding of the proper address. Then the scrambled speech is again passed through a sideband generator using a carrier frequency just above the bandwidth of the information to provide sideband signals. The sideband signals are then passed through a filter which filters out the upper sideband thereby leaving a non-inverted base band.

## Brief Description of the Drawings

FIG. 1 is a block diagram of a communications system using the present invention;

FIG. 2 illustrates the invention in block diagram form as would be used in a cordless telephone handset; and

FIG. 3 illustrates in block diagram form an embodiment of the present invention as would be used in a base station for a cordless telephone system.

## Detailed Description of the Drawings

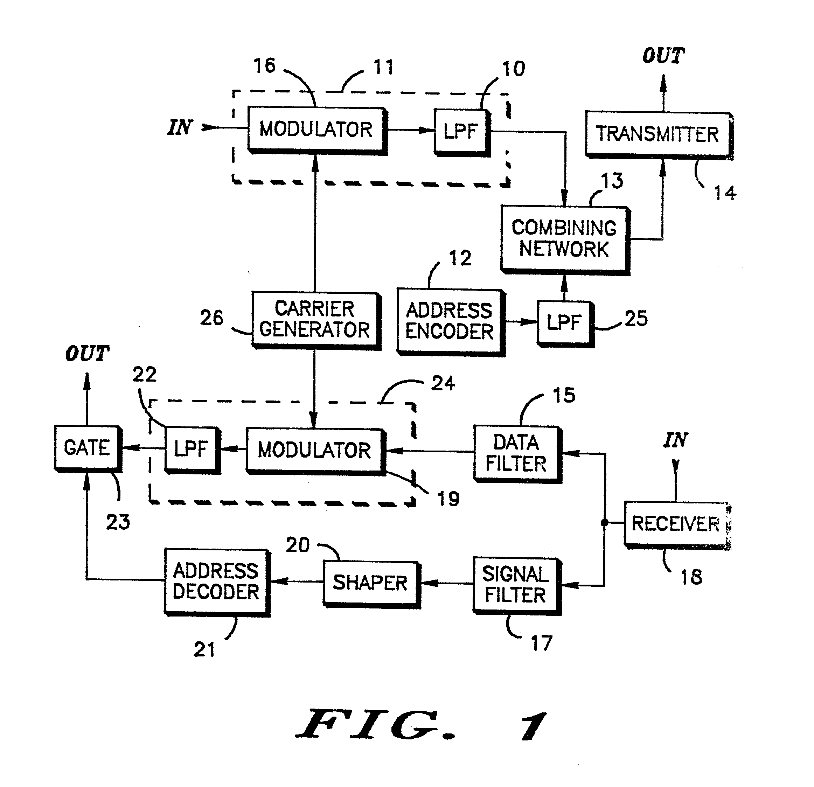

FIG. 1 illustrates a system for scrambling and unscrambling information in accordance with one embodiment of the present invention. The information in the form of an analog signal is input to frequency inverter 11. Frequency inverter 11 provides the inverted frequency signal to combining network 13. Address encoder 12 supplies an encoded address signal which is bandwidth limited by low pass filter 25 and passed to combining network 13 where it is combined with the inverted frequency from frequency inverter 11 and outputted to communications transmitter 14. Frequency inverter 11 is implemented by combining amplitude modulator 16 and low pass filter 10 to generate a frequency inverted lower sideband signal.

Modulator 16 can be any type of modulator that generates upper and lower sidebands. Whether the carrier is suppressed or not is not too important since filter 10 can filter out the carrier frequency as well as the upper sideband. The digitally encoded address occupies a different baseband than does the inverted frequency and so combining network 13 is merely an algebraic summing network. Scrambled information is passed to the transmitter which sends it to receiver 18. Receiver 18 passes the scrambled information to data filter 15 and signal filter 17. Signal filter 17 strips off the frequency inverted signal and passes the address to pulse shaper 20 which restores the waveform and passes it to decoder 21. Data filter 15 filters out the address and passes the frequency inverted signal to frequency inverter 24. Here it is re-inverted through the use of amplitude modulator 19 and low pass filter 22 and the unscrambled lower sideband is passed to signal gate 23. Address decoder 21 provides an enabling signal to signal gate 23 when decoder 21 decodes the proper address from the signal received from receiver 18. Filter 22 receives an input from amplitude demodulator 19 and filters out the carrier and upper sideband thereby providing a non-inverted signal to analog signal gate 23. Signal gate 23 is controllable and therefore requires an enabling signal. It should be noted that gate 23 can be located anywhere within the signal path through filter 15, modulator 19 and filter 22 since its primary purpose is to inhibit an output if address decoder 21 does not provide an enabling signal.

Frequency inverter 11 provides a single sideband signal which is frequency inverted from the input unscrambled signal. Address encoder 12 adds an encoded address to the signal before it is transmitted so that an unscrambler connected to receiver 18 will not only be able to obtain the information from the inverted signal but will also be assured that the information it has received is intended to be received. If address decoder 21 does not decode the proper address then signal gate 23 will not be enabled and no output will be sent to the remaining receive signal processing circuitry. Analog signal gate 23 can be a discrete element as shown or it can be incorporated into the frequency inverter as any element which opens the channel or disables the inverter. Carrier generator 26 provides the carrier signal for modulators 16 and 19.

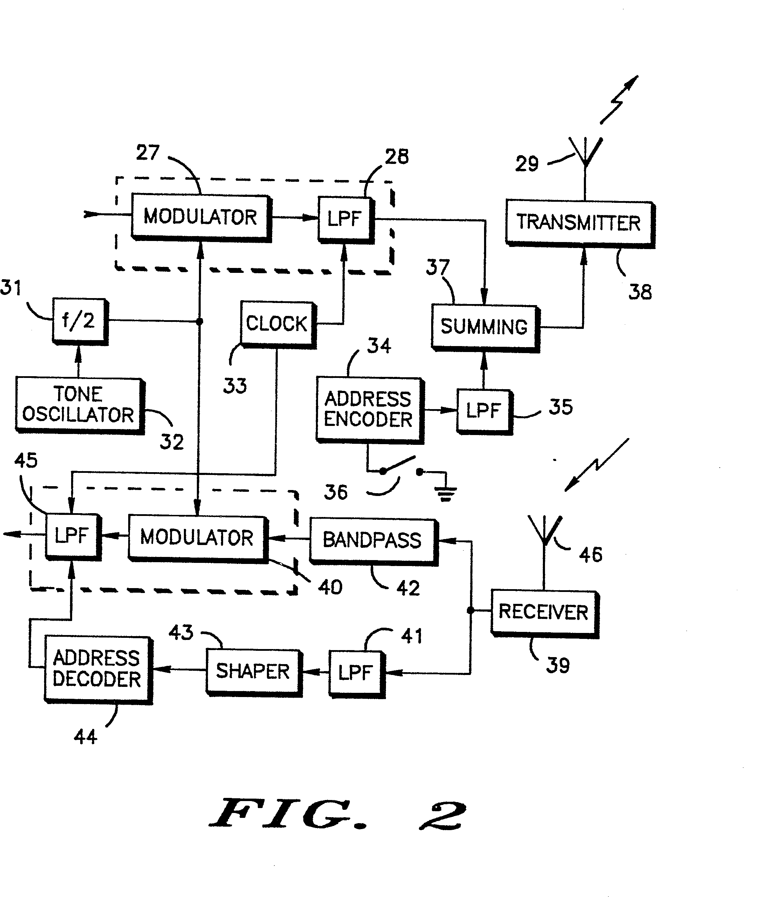

FIG. 2 illustrates in block diagram form, in greater detail, the scrambling and unscrambling portion of the system of FIG. 1 as it would typically be used in a handset of a cordless telephone system. In particular FIG. 2 illustrates to a further degree a preferred embodiment of the frequency inverter.

The voice scrambler employs a principle of frequency inversion to render the audio unintelligible to any listener not having a complementary unscrambler. Thus, privacy from eavesdropping by co-users of the same RF band, equipped with monitor receivers, single sideband receivers, toy walkie-talkies, older unscrambled cordless telephones, etc., is assured. Privacy from eavesdropping by users of identical cordless telephones having unscramblers is achieved by use of a digitally encoded address which is sent continuously during RF transmission in both directions. If any receiver equipped with this address decoder stops receiving the proper code word or address, its receiver audio will be muted. The voice scrambling and digital address code transmission should assure voice privacy under all but the most unusual circumstances.

In the preferred embodiment shown in FIG. 2, the carrier signal provided by frequency divider 31 will be derived from the pilot tone generator 32. Some handsets use a 6 KHZ oscillator for pilot tone generation, as an example. Using the pilot tone oscillator will avoid adding an additional oscillator. However, the pilot tone oscillator will have to be set to 6.6 KHZ so as not to truncate the 300-3000 Hz audio pass band. By dividing the 6.6 KHz tone signal by two, a 3.3 KHz signal can be obtained for use as the carrier frequency of the scrambler's balanced modulator 27 as well as for the descrambler's balanced modulator 40. Any difference between these two carrier frequencies will cause a shift in the pitch of the sidetone signal if sidetone is injected into the FM receiver's RF section. Therefore deriving them from the same oscillator will assure the frequencies are the same.

The digital code word generated by address encoder 34 is transmitted asynchronously by deviating the RF carrier frequency directly. The digital address baseband, in a preferred embodiment, lies below 270 HZ. Energy from the digital signal above this band follows a sinX/X distribution and is attenuated by low pass filter 35 in FIG. 2 before being connected to summing network 37. A modulation index of approximately unity for this signal is used so that the required channel bandwidth to accommodate it is minimized.

The voice from the handset microphone would be received by balanced modulator 27 which would provide a suppressed carrier upper sideband and lower sideband output signal. The carrier signal is obtained from an available oscillator such as tone oscillator 32 and frequency divider 31. Cordless telephone handsets typically have such a tone oscillator to transmit dialing pulses. The pilot tone frequency provided by tone oscillator 32 is divided down by frequency divider 31, in a preferred embodiment, to provide a 3.3 KHz carrier for balanced modulator 27. This carrier as well as the modulating signal can drive balanced modulator 27 either single endedly or differentially for improved modulator performance and reduced spurious output. Thus, balanced modulator 27 will provide an upper sideband and a lower sideband signal centered around a suppressed carrier signal of 3.3 KHz. The sidebands are coupled to a low pass filter 28 which has a cutoff frequency of about 3.3 KHz to provide only the lower sideband signal at the output of filter 28. This single lower sideband signal will appear to be frequency inverted from the voice signal received by balanced modulator 27. In a preferred embodiment, filter 28 is a low pass switched capacitor filter having passband edges or break points tunable with a clock frequency. In this case, the clock frequency is provided by clock 33 which is coupled to filter 28. If oscillator 33 does not provide a 50% duty cycle output then it will have to be restored to a 50 percent duty cycle by being coupled to filter 28 through a D type flip-flop in which case the frequency of clock 33 must be doubled since the D flip-flop will divide the frequency in half. Because of the close proximity between the upper and lower sidebands, filter 28 should have a steep skirt but be physically small in size and thus a switched capacitor filter is preferred.

Address encoder 34 will be enabled when switch 36 is closed which represents the handset transmit enable signal. The output of address encoder 34 is connected to low pass filter 35 to limit the bandwidth of the address signal. The low pass filter 35 only passes the encoded digital address word's fundamental energy which lies below the 300-3000 Hz inverted speech. This sub-audio data modulation is frequency multiplexed with the voice modulation by summing them together in summing network 37. These two signals are then fed to the handset's FM transmitter 38, where they are sent to the base station via antenna 29.

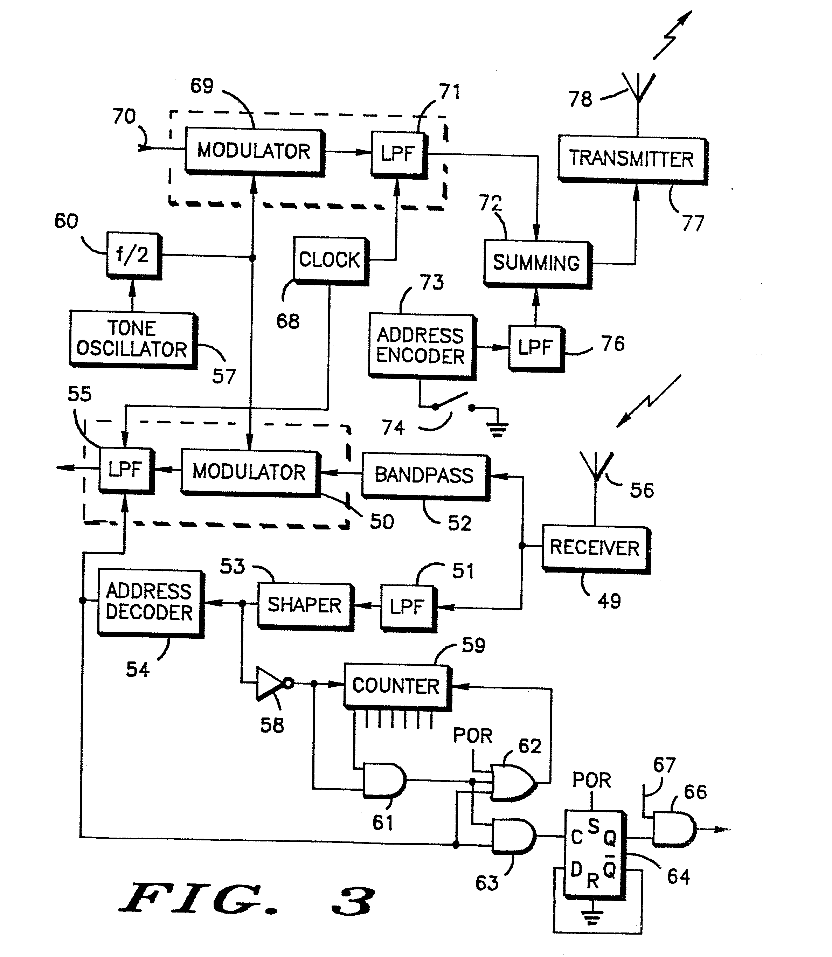

The unscrambling portion of this handset circuit shown in FIG. 2 receives a scrambled or frequency inverted signal via a modulated RF carrier from the base station at antenna 46. It will be noted that in an actual handset antennae 29 and 46 may be one and the same; however, for sake of explanation of the present invention they are illustrated as being separate. FM receiver 39 receives the RF carrier having a scrambled baseband signal and an address signal. The address signal is routed to pulse shaper 43 through low pass filter 41 which strips off the frequency inverted speech. The scrambled speech is routed to balanced modulator 40 through band pass filter 42 which strips off the address. Balanced modulator 40 also receives the carrier signal injection frequency from frequency divider 31. The output of balanced modulator 40 will be a lower sideband containing uninverted audio and an upper sideband containing inverted audio with a suppressed carrier. Low pass filter 41 insures that only the coded digital address will be reshaped by pulse shaper 43. The output of pulse shaper 43 is connected to address decoder 44 where the digitally coded address is decoded. If address decoder 44 detects the proper address it provides an output to low pass filter 45 which enables filter 45. Thus the functions of analog signal gate 23 and low pass filter 22 of FIG. 1 are combined in this embodiment. If decoder 44 does not detect the expected address, it will not provide an enabling signal to filter 45, and filter 45 will remain in the standby mode, thereby opening the audio path. Loss of the proper address code by the handset unscrambler can be made to result in an immediate response as shown in FIG. 2 or can be made to result in a delayed response as will be described in FIG. 3. Filter 45 will filter out the upper sideband leaving only the lower uninverted audio signal which will be passed to the handset's earpiece amplifier.

FIG. 3 illustrates a base scrambler and unscrambler of a cordless telephone system. A cordless telephone system has two major parts. The first part is a base station which is connected to the telephone lines. The second portion is a handset which is portable and usable within a limited range of the base station. The similarity of the scrambler/unscrambler in the base and handset can be noted by comparing FIGS. 2 and 3. Input 70 receives information from the telephone lines and is connected to the input of balanced modulator 69. Balanced modulator 69 receives the carrier signal of 3.3 KHz from frequency divider 60 and provides a suppressed carrier upper sideband and lower sideband signal to low pass filter 71. Filter 71 receives its clocking signals from clock 68 and provides a frequency inverted output to summing network 72. Data output from address encoder 73 is coupled to network 72 by a low pass filter 76. Address encoder 73 is enabled by the base station's transmit enable signal which is represented by switch 74. At the output of summing network 72, the digital address word and the remaining lower sideband, which is the frequency inverted speech, are combined to provide a scrambled output which is sent to base FM transmitter 77 where through antenna 78 it is sent on to the handset.

Information from the handset is received by base station antenna 56 and FM receiver 49 and is connected to band pass filter 52, low pass filter 51 and tone decoder 57. Band pass filter 52 passes the scrambled speech signal to balanced modulator 50 which receives a carrier signal from frequency divider 60 and provides an upper and a lower sideband signal which is connected to low pass filter 55. Tone decoder 57 takes the pilot tone signal generated by the handset, which as stated hereinbefore is 6.6 KHz, phase locks a voltage controlled oscillator (VCO) to it which then provides the tone signal to frequency divider 60. Frequency divider 60 provides a 3.3 KHz carrier signal which is now phase locked to the 3.3 KHz signal within the handset to balanced modulator 50 and to balanced modulator 69. Low pass filter 51 couples only the coded address signal to pulse shaper 53. The output of pulse shaper 53 is connected to address decoder 54 and to inverter 58.

Address decoder 54 provides an output, upon the detection of a proper address signal, which is used to enable low pass filter 55. The output of address decoder 54 is also connected to an input of a triple input OR gate 62 and an input of a dual input AND gate 63. The output of low pass filter 55 eventually drives the telephone lines through a line driver amplifier. Clock 68 provides a clocking signal which is connected to low pass filters 55 and 71.

Inverter 58 receives an input from pulse shaper 53 and provides a clock signal to programmable counter 59 and to a first input of a dual input AND gate 61. Upon reaching the programmed count, counter 59 provides an output to the second input of AND gate 61. AND gate 61 provides an output to a second input of OR gate 62 and a second input to dual input AND gate 63. The first input of AND gate 63 is from address decoder 54. A third input for OR gate 62 is provided by a power on reset (POR) signal which causes the output of OR gate 62 to provide a reset to programmable counter 59. The output of AND gate 63 is connected to the clock input of a D flip-flop 64. The reset input of flip-flop 64 is connected to ground and the $\bar{Q}$ output of flip-flop 64 is connected to its D input. The set input of flip-flop 64 is connected to power on reset; and its Q output is connected to a first input of a dual input AND gate 66. The second input of AND gate 66 is connected by line 67 to a signal from the base station logic circuitry indicating that the speaker or handset are in use. The output of AND gate 66 is connected to the hook switch circuitry of the base logic. Inverter 58, counter 59, AND gates 61, 63, 66, OR gate 62, and flip-flop 64 provide a timeout feature which prevents the base station from opening the hook switch and terminating the call in the event of a momentary loss of the proper incoming address. This time delay can be selected by providing a jumper to certain pins of counter 59.

To provide a fundamental bandwidth of 0 to 270 Hz, the clock frequency of the address encoder is set to 135 Hz. With a 135 Hz clock frequency, when the handset transmit enable signal goes active low, the digitally coded address can be sent out continuously at about a two word per second rate. If the last code word received by the base decoder was either incorrect or lost through power down, then the first word received will not match the last word received and a second word will have to be transmitted and received before the enabling signal is provided from the address decoder to low pass filter 45 or 55 which will enable the filter and thus turn on the receive audio path. Hence, the worst case access time to hear a dial tone in the handset earpiece will be the time to send two digital code words plus the sum of the transmit enable attack times at both ends. With a 135 Hz clock, this will be approximately one second. Raising the clock frequency to shorten this access time can cause the digital baseband to spill over into the audio baseband. Lowering the clock frequency to further isolate the two bands lengthens the access time.

Also, in the base station receiver only, power on reset (POR) enables the hook switch signal so that it can close the audio path to the subscriber line. The hook switch signal is always enabled unless an illegitimate address continues to be detected. In such a case, address decoder 54 will not provide an enabling output and the positive transitions of the digital address bits will begin clocking counter 59, which can be programmed (by jumpers) or fixed, to count a predetermined number of transitions of delay before disabling the hook switch signal. This provides a time out timer so that if a bit error causes the wrong address to be received only for a short time, the hook switch is not opened immediately. However, if the wrong address continues to be received for the delay time programmed into counter 59, which can be up to sixty seconds for a 135 Hz address clock frequency, then the hook switch will be opened and the call terminated. The digital address word is similarly transmitted in the opposite direction. If there is no time out timer in the handset the time it takes to disable the audio path in this direction is either the time it takes to transmit one incorrect code word, which is approximately one-half a second with 135 Hz clock, or else the time it takes to transmit 4-bits depending on whether the receiver was captured by another transmitter or transmission of address words ceased. If there is a time out timer in the handset. then the proper address has to be lost for the predetermined delay time before the audio path is opened.

In a preferred embodiment it is intended that the majority of the circuitry for the handset all be integrated on a single integrated circuit chip and the majority of the circuitry for the base station also be integrated on a single integrated circuit chip. By way of example only, some readily available integrated circuits can be used for some of the functional blocks shown in FIGS. 2 and 3. Frequency dividers 31 and 60 can be made from a dual type D flip-flop which can be obtained as an MC14013 part. Address decoder 44 and 54 can be MC145028 parts while address encoders 34 and 73 can be MC145026 parts. Low pass filters 28, 45, 55, and 71 can be dual tunable low pass sample data filters provided as MC145414 parts. Programmable counter 59 can be an MC14040 part. All of these parts are made and sold by Motorola, Inc. It should be noted that when using the suggested address decoder and low pass filters that an inverter has to be placed in series between the address decoder and the low pass filter in order to obtain the proper polarity enabling signal to the low pass filter. This inverted signal will also be connected to the input of AND gate 63 in FIG. 3 while the input to OR gate 62 from address decoder 54 would not have to be inverted.

By now it should be appreciated that there has been provided a voice privacy system for full duplex radio/ telephone equipment. The voice scrambler employs the principles of frequency inversion and digital addressing to render the audio unintelligible to listeners not having a complementary unscrambler and unavailable to users of identical cordless telephones having unscramblers with a different address. If any receiver equipped with this decoder stops receiving the proper address code word its receiver audio will be muted. Thus if handset receiver B is erroneously captured by base station A, it will receive the wrong digital address code and thus have its receiver audio muted. If base station receiver B is captured by handset A, while it was being used by handset B, it would begin receiving the wrong digital address code and thus have its receiver audio muted after the time out timer clocked to zero. If base station receiver B is captured by handset A while handset B is not in use, the wrong digital address code will be received and the hook switch in base station B will never be closed. The timing for the scrambler can be derived from the oscillator presently employed in the handset for pilot tone generation. This avoids adding an additional oscillator/tone decoder to the system for locking the demodulator oscillator frequency to the modulator oscillator frequency. The system does not delay the information since no delay or storage circuits are used in processing the information.

Although the present invention has been described in conjunction with cordless telephones it should be recognized that it would be useful in other full duplex channel services. With minor additions to the hardware this technique can also be applied to half duplex communications. The present invention is media independent and can be applied to radio, wire line, optical and other types of voice channels. Accordingly, it is intended that the following claims encompass all such modifications which are in keeping with the spirit and scope of the present invention.

CLAIMS

1. A cordless telephone having a voice privacy system comprising: a scrambler and an unscrambler; the scrambler comprising a first frequency inverter and a first address encoder, the first frequency inverter comprising a first sideband generator for providing an upper and a lower sideband of an audio signal, and a first low pass filter coupled to the first sideband generator for filtering out the upper sideband and carrier frequencies thereby providing the lower sideband as a frequency inverted output, the first address encoder coupled to the first frequency inverter for providing an address signal to the frequency inverted lower sideband; and the unscrambler comprising a second frequency inverter and a first address decoder, the second frequency inverter comprising a second sideband generator for providing an upper and lower sideband of the scrambled audio signal and a second low pass filter coupled to the second sideband generator for passing the lower sideband; the first address decoder being for receiving the address signal and providing an output upon decoding a predetermined address which enables the output from the second low pass filter.

2. The cordless telephone of claim 1 further having a base station unscrambler and scrambler, the base station unscrambler having a third frequency inverter and a second address decoder, the third frequency inverter having a third sideband generator for receiving a scrambled signal and providing an upper and a lower sideband of the scrambled signal, and a third low pass filter coupled to the third sideband generator for passing the lower sideband; the second address decoder also receiving the scrambled signal and providing an output upon receipt of a predetermined address which is coupled to the third low pass filter to enable the third low pass filter; and means for hanging up a telephone hook switch located in the base station upon failure of the second address decoder to provide an output for a predetermined period of time; and the base station scrambler having a fourth frequency inverter and a second address encoder, the fourth frequency inverter having a fourth sideband generator for receiving telephone audio and providing an upper and a lower sideband; a fourth low pass filter coupled to the fourth sideband generator for passing the lower sideband; and the second address encoder coupled to the fr'.quency inverter for adding an address signal to the lower sideband.

3. The cordless telephone of claim 1 further includng a tone oscillator for generating a carrier signal coupled to the first and second sideband generators.

4. The cordless telephone of claim 2 wherein the first, second, third and fourth low pass filters are switched capacitor filters; and further including a first oscillator for providing a clock frequency to the first and second low pass filters; and a second oscillator for providing a clock frequency to the third and fourth low pass filters.

5. The cordless telephone of claim 2 further including a delay timer which delays disabling of the unscrambler for a predetermined period of time after a correct address ceases to be decoded.

6. A method of providing a privacy system for transferring information, comprising: modulating the information to provide a double sideband signal; passing this double sideband signal through a first filter to extract a lower sideband and thus obtain a frequency inverted signal; and combining the frequency inverted

0131919

-16-

signal with an address signal thereby providing scrambled information having a predetermined address.

7. The method of claim 6 further including modulating received scrambled information to provide a double sideband signal; passing the double sideband signal through a second filter to extract a lower sideband and thus obtain an unscrambled signal; and enabling an output from the second filter upon decoding of a predetermined address from within the scrambled information.

8. A system for providing scrambled information to prevent unauthorized reception, comprising: a sideband generator for providing a double sideband signal having an upper and a lower sideband of a signal to be transmitted; a first filter coupled to the sideband generator to filter out the upper sideband and leave the lower sideband which is frequency inverted from the signal to be transmitted; a summing network coupled to the first filter for receiving the lower sideband; and an address encoder coupled to the summing network for providing an address to be transmitted with the lower sideband.

9. The system of claim 8 further including circuitry for unscrambling received frequency inverted information, comprising: a second sideband generator coupled to the frequency inverted information and providing an upper and lower sideband of the frequency inverted information; a second filter coupled to the sideband generator and providing a lower sideband which is frequency inverted from the received information; and an address decoder coupled to receive the frequency inverted information and to provide an enabling signal to the second filter only upon receipt of a predetermined address.

10. The system of claim 9 wherein the first and second filters are switched capacitor filters; and further including a pulse shaper coupled between the decoder and the frequency inverted information; and a delay timer for inserting a predetermined time delay between the time when the proper address has ceased to be decoded and the time when an appropriate electronic response is initiated in order to prevent immediate response to momentary loss of address information.

*FIG. 1*

FIG. 2

0131919

FIG. 3